(19) **Europäisches Patentamt / European Patent Office / Office européen des brevets**

(11) **EP 1 412 207 B1**

(12) # EUROPEAN PATENT SPECIFICATION

(45) Date of publication and mention
of the grant of the patent:
**16.04.2008 Bulletin 2008/16**

(21) Application number: **01955914.5**

(22) Date of filing: **19.07.2001**

(51) Int Cl.:
**B60C 17/06** *(2006.01)*     **B60C 17/01** *(2006.01)*

(86) International application number:
**PCT/US2001/023163**

(87) International publication number:
**WO 2003/008209 (30.01.2003 Gazette 2003/05)**

(54) **RUNFLAT INSERT FOR TIRES**

NOTLAUFEINSATZ FÜR REIFEN

INSERT DE ROULAGE A PLAT POUR PNEUMATIQUES

(84) Designated Contracting States:
**AT BE CH CY DE DK ES FI FR GB GR IE IT LI LU MC NL PT SE TR**

(43) Date of publication of application:
**28.04.2004 Bulletin 2004/18**

(73) Proprietors:
• **Société de Technologie Michelin**
**63000 Clermont-Ferrand (FR)**
• **Michelin Recherche et Technique S.A.**
**1763 Granges-Paccot (CH)**

(72) Inventors:
• **RHYNE, Timothy, B.**
**Greenville, SC 29609 (US)**

• **DEMINO, Kenneth, W.**
**Anderson, SC 29621 (US)**
• **CRON, Steven, M.**
**Simpsonville, SC 29681 (US)**

(74) Representative: **Diernaz, Christian**
**M. F. P. Michelin,**
**SGD/LG/PI-F35-Ladoux**
**63040 Clermont-Ferrand Cedex 09 (FR)**

(56) References cited:
**US-A- 3 254 692          US-A- 3 885 614**
**US-A- 5 975 171**

**Description**

BACKGROUND OF THE INVENTION

The present invention relates to a runflat insert for mounting on a wheel rim and inside a pneumatic tire. In case of loss of inflation pressure from the tire, the insert is capable of taking up the vehicle loads. In particular this invention provides improved performance in load carrying, vehicle handling, and mass.

Many solutions have been proposed to provide continued vehicle mobility after loss of inflation pressure in a pneumatic tire. One class of solutions involves fixing a rigid or semi-rigid insert to the wheel rim and inside the tire. Upon loss of inflation pressure, the vehicle is supported by load transmission from the portion of the insert contacting the inside of the tire directly through the insert structure to the wheel rim. This solution has limited capability to absorb sharp load inputs from the road, thereby operationally limiting the usefulness of the insert. A solution having a structurally supported runflat insert that delivers pneumatic tire-like performance would be a welcome performance improvement.

US-A-3885614 is disclosing a structurally runflat insert for enabling a vehicle to run on a deflated tire mounted on a wheel rim, such structurally insert having the features of the preamble of claim 1.

SUMMARY OF THE INVENTION

The subject of the instant invention is a runflat insert having improved characteristics in load carrying, vehicle handling, mass, and shock transmission, wherein an outer, reinforced annular band is coupled with a sidewall structure having little resistance to compressive loads. Such a runflat insert for enabling a vehicle to run for limited duration on a deflated tire, is mounted in an assembly comprising a pneumatic tire and a wheel rim, and said insert is mounted inside the air cavity of the tire and secured to the wheel rim, said insert comprising:

> a) an elastomeric outer contacting portion for contacting the interior surface of the tire during deflated operation of the tire, and
> b) a reinforced annular band disposed radially inward of said outer contacting portion, wherein said band comprises an elastomeric shear layer, at least a first membrane adhered to the radially inward extent of said elastomeric shear layer and at least a second membrane adhered to the radially outward extent of said elastomeric shear layer, and
> c) at least one sidewall portion extending radially inward from said contacting portion for connecting said annular band to a base member fitted around the wheel rim for securing said insert to the rim, and
> d) at least one carcass layer adhered to said annular band, and said carcass extending radially inward from said annular band and anchored in said base member.

When the vehicle tire deflates and/or the tire deflects sufficiently, the insert contacts the interior surface of the tire. The applied load flattens the annular band. The deformation of the band causes tensile forces to develop in that portion of the sidewall that is out of contact with the tire. The vehicle wheel effectively hangs from the annular band by the sidewall portions. The sidewall portion is essentially inextensible in tension, but has little resistance to compressive buckling. Conversely, in rigid or semi-rigid inserts, the inserts support the load by compression in the portion of insert in contact with the interior surface of the tire.

Runflat inserts may be tightly fixed to the wheel rim or require the use of extra material or spacers to maintain proper lateral location of the insert on the rim. In the instant invention, the base member has a high resistance to rotation about a longitudinal axis. The base member may have monolithic cores comprising a generally rectangular cross-section having a width of about 5% of the section width of the insert, and the core has a height equal to about 50 percent of its width. Alternatively, the core may comprise one of several arrangements of reinforcing wires. When this base member structure is coupled with radially oriented sidewall portions, the insert has the advantage of maintaining a stable alignment on the rim and requires no additional internal spacers or reinforcements.

Performance of the insert improves when the sidewall portion is biased to buckle advantageously in an axially outward direction when subjected to compressive loading. In the instant invention the sidewall is biased by an elastomeric wedge positioned in the sidewall essentially mid way between the first membrane and the base member. The wedge forces a curvature in the profile of the carcass layer. When the wedge is combined with the proper thickness of rubber on the outside of the carcass layer, the invention obtains the desired result of a consistent outward buckling of the sidewall in the region contacting the tire.

A properly inflated pneumatic tire exerts a relatively uniform contact pressure against the road surface. When rigid or semi-rigid inserts deform under load to support the wheel, the contact pressure with the interior of the tire is non-uniform. However, the insert according to the invention, when deflected against the inside of a deflated tire, exhibits a relatively uniform contact pressure and a contact area similar to that of a pneumatic tire. This attribute exists when the ratio of the longitudinal tension and compression moduli of each of the membranes to the shear modulus of the shear layer is at least 100:1. That is to say that the membranes behave as essentially inextensible and deformation of the annular band is accommodated by shear strain in the elastomeric shear layer.

Each membrane is comprised of a pair of biased cord-reinforced layers with the cords arranged at an angle of about 10 degrees to about 20 degrees with the centerline of the insert. The elastomeric shear layer will have a shear modulus of elasticity between about 3 MPa and about 20 MPa. The shear layer preferably has low level of hysteresis with tangent delta less than or equal to than about 0.1.

The invention permits the designer to adjust the effective contact pressure as a design parameter of the insert. The contact pressure is approximated by the product of the shear modulus of elasticity of the shear layer, times the radial thickness of the annular band, and divided by the radius of the outermost extent of the second membrane. This contact pressure will normally be in the range of about 2 bar to about 6 bar. A contact pressure of about 3 bar yields a good compromise between the size and mass of the insert and vehicle performance.

From the point of view of load capacity, the ideal insert may have a section width and a section height limited only by the requirement of non-contact with the tire during normal operation. In a preferred form of the invention, the insert has a section width between about 50% to about 70% of the tire section width, and a section height between about 40% to about 60% of the tire section height.

DESCRIPTION OF THE DRAWINGS

The invention will be better understood by reference to the following non-limiting examples illustrated in the attached figures. The intent of these figures is to illustrate the significant structural characteristics of the invention. The figures are not drawn to scale.

FIG. 1 shows a radial section of an assembly comprising the runflat insert 100 mounted on a wheel rim and inside a tire. Figure 1 shows the loaded assembly, with the tire in a deflated state.

FIG. 2 shows a partial radial section of the runflat insert 100 having a high turnup carcass that overlaps the second membrane.

FIG. 3 shows a partial radial section of a runflat insert 200 having a single carcass layer adhered to the first membrane and having a sidewall portion biased to buckle outward under compression.

FIG. 4 shows a partial radial section of a runflat insert 300 wherein the carcass layers are discontinuous segments adhered to the annular band and having a sidewall portion biased to buckle outward under compression.

FIG. 5 shows a partial radial section of the base member of a runflat insert having a 3-2-1 arrangement of adjacent reinforcing wires.

FIG. 6 shows a partial radial section of the base member of a runflat insert having a 4-3-2 arrangement of adjacent reinforcing wires.

FIG. 7 shows a partial radial section of the base member of a runflat insert having a monolithic reinforcement.

FIG. 8 shows an imprint of the contact area of the runflat insert 300 as compared to an elastomeric insert of conventional construction.

FIG. 9 shows a graph of applied load versus vertical deflection an assembly of an inflated tire, a rim and the runflat insert 300 as compared to an elastomeric insert of conventional construction.

DETAILED DESCRIPTION OF THE INVENTION

The invention and its several variations will be better appreciated from the following detailed description. The Figures and detailed description disclose several exemplary illustrations of particular variations of the invention as of the invention. One skilled in the art will recognize that particular elements of these variations may be selected or combined to yield still further examples within the spirit and scope of the invention.

The following nomenclature and definitions are common to all variations of the invention disclosed herein. Similar reference numbers are used throughout to describe the same element or material. Similar elements are not discussed in detail when disclosed in a subsequent variation of the invention.

Definitions of terms:

"inner" or "inward" means toward the interior of the insert.

"outer" or "outward" mean towards the exterior of the insert.

"axial" refers to a direction that is parallel to the axis of rotation of the insert

"radial" refers to a direction perpendicular to the axis of rotation of the tire.

"Modulus" of elastomeric materials means the tensile modulus of elasticity measured at 10 percent elongation.

"Modulus" of the membranes means the tensile modulus of elasticity at 1 percent elongation multiplied by the effective thickness of the membrane.

"Shear Modulus" of elastomeric materials means the shear modulus of elasticity and is defined equivalent to one-third the tensile modulus of elasticity measured at 10 percent elongation.

"Hysteresis" means the tangent delta measured at 100 degrees Celsius under a 30 Hz, 50 percent peak-to-peak dynamic shear strain.

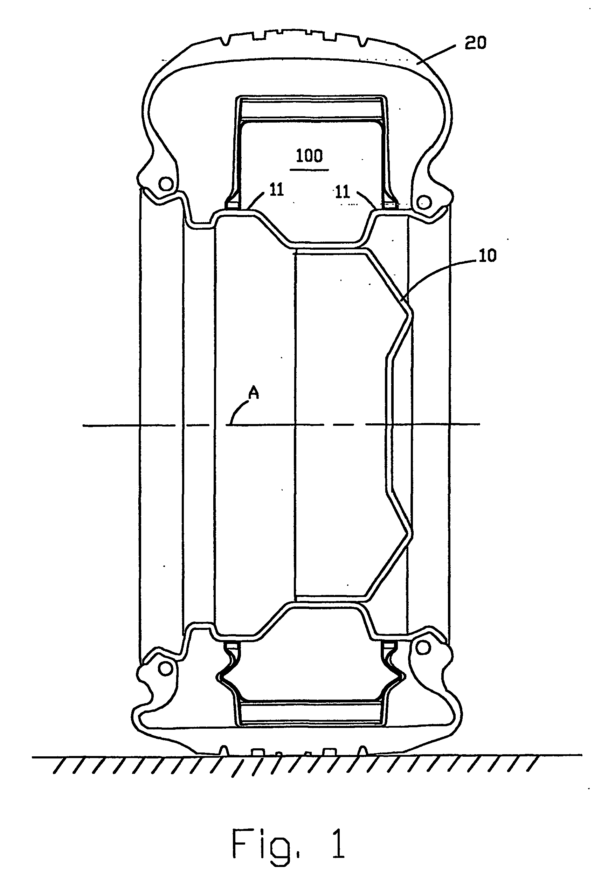

Figure 1 shows a runflat insert 100 mounted as an assembly with specialized rim 10 and tire 20 for enabling a vehicle to run on a deflated tire. When the tire is fully inflated, the tire pneumatically supports the vehicle load, and the insert does not continuously contact the interior surface of the tire. However, as the inflation pressure of tire 20 decreases from normal operating conditions, the vertical deflection of tire 20 increases to the point where insert 100 contacts the inner surface of tire 20. Figure 1 shows the operating condition with an uninflated tire where deformation of the runflat insert 100 supports essentially the entire vehicle load. The fully deflated tire no longer provides significant load support, and the insert structurally supports the load.

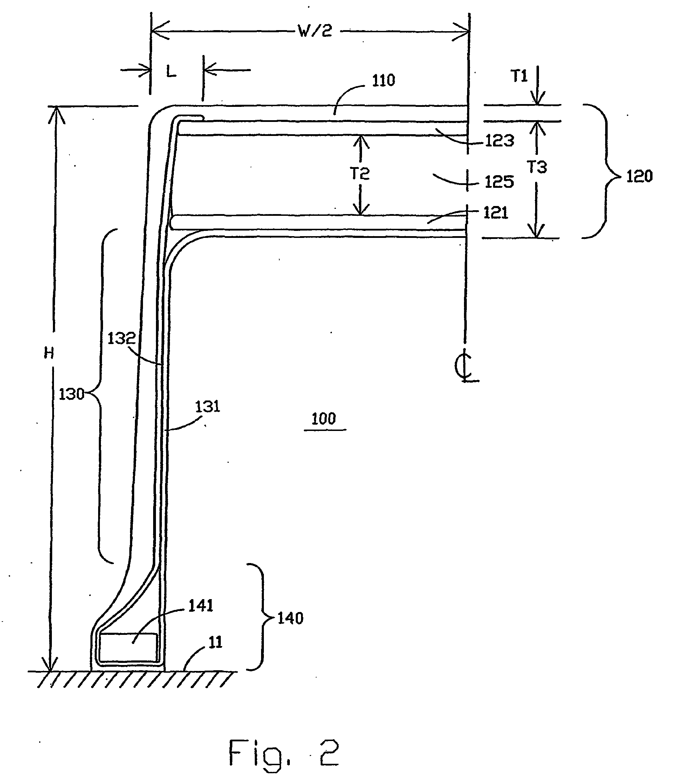

Figure 2 shows a more detailed view of the insert 100. Insert 100 has an overall section width W and a section height H; the latter defined as the distance between the mounting surface 11 of the wheel 10 and the outer contacting surface of the insert. Insert 100 has a sidewall height HS measured between the radially outward extent the bead core 141 and the radially interior surface of the insert. According to the variations of the invention disclosed herein, the radially outward extent of the sidewall height HS may correspond to either the carcass layer 131 or the first membrane 121. Sidewall thickness measurements are referenced to the axial direction. Thickness measurements for the outer contacting portion, membranes, and the shear layer are referenced to the radial direction. The outer contacting portion 110 has a thickness T1, shear layer 125 has a thickness T2, and the annular band comprising the shear layer and the first and second membranes has a thickness T3.

Insert 100 comprises the structure depicted in Figure 2. An elastomeric outer contacting portion 110 provides the load-bearing surface for contact with the interior surface of the tire. A reinforced annular band 120 is disposed radially inward from the contacting portion 110. The reinforced annular band 120 comprises a first membrane 121 adhered to the inner surface of an elastomeric shear layer 125, and a second membrane 123 adhered to the outer surface of the elastomeric shear layer 125. Sidewall portion 130 extends radially inward from the contacting portion 110 and the annular band 120. A base member 140 containing bead cores 141 fits around the wheel rim surface 11 and secures the insert to the rim in both inflated and deflated operation.

Runflat insert 100 further comprises a carcass layer having a main portion 131 that is adhered to the radially inner surface of the first membrane 121 and extending between the bead members 140. The carcass layer has a turned up portion 132 folded around the bead core 141. The flexural stiffness of the reinforced annular band 120 improves when the turned up portion 132 of the carcass is adhered to the axially outer face of the band. In the form of the invention corresponding to runflat insert 100, the turned up portion 132 extends radially outward from the base member 140, adheres to the axially outer face of the band, and terminates in an axial overlap with the second membrane 123. This overlap facilitates fabrication of the insert on conventional tire building equipment. The overlap extends an axial distance L inward from the extremity of second membrane of about 10mm. In other forms of the invention, the turned up portion 132 may terminate without overlap, at the axial extremity of the second membrane 123, or at some lower radial location within the sidewall 130 or bead member 140.

The tensile resistance of the carcass layer is sufficient when the linear stiffness per unit circumference, measured at the mid-height of the sidewall, of the carcass reinforcements and surrounding elastomeric layers is at least 100 daN/mm. In the runflat insert 100, polyester cords comprise the reinforcement of the carcass layer 131,132, but any material suitable as a tire reinforcement material may be used. In a non-pneumatic structure such as the runflat inserts disclosed herein, the average tensile force in each of the carcass reinforcing cords is significantly lower than in an inflated, pneumatic tire. Therefore, as segments of the sidewall rotate in and out of the contact region, there is an increased likelihood that compressive stress will occur in the carcass layer. For this reason, the most advantageous choice for carcass reinforcement material is one with good resistance to cyclic compressive loading.

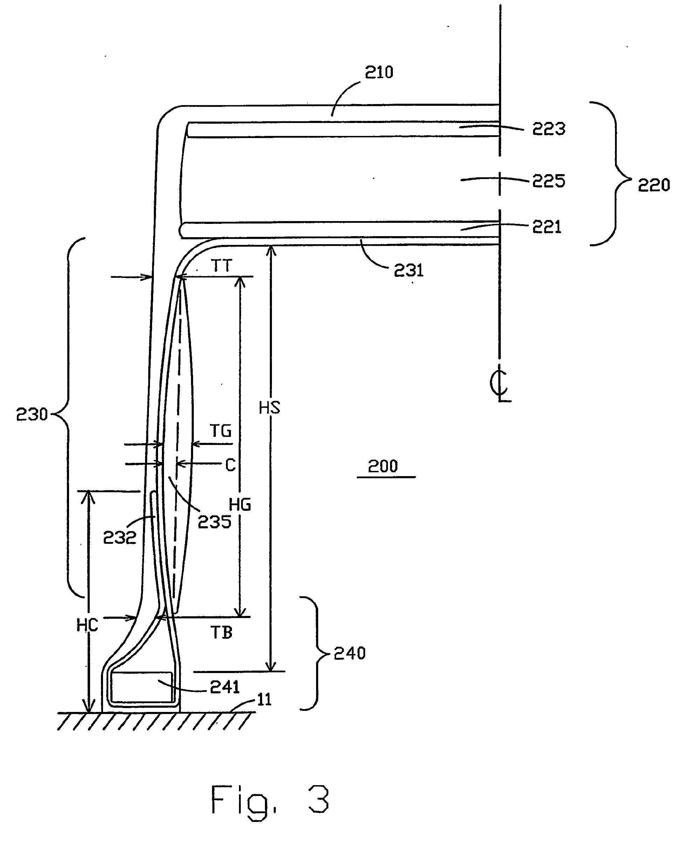

Experimentation with the runflat insert 100 has shown that elimination of the double layer carcass in the upper sidewall portion improves durability. Figure 3 shows such an improved version of the invention. An elastomeric outer contacting portion 210 provides the load-bearing surface for contact with the interior surface of the tire. A reinforced annular band 220 is disposed radially inward from the contacting portion 210. The reinforced annular band 220 comprises a first membrane 221 adhered to the inner surface of an elastomeric shear layer 225, and a second membrane 223 adhered to the outer surface of the elastomeric shear layer 225. Sidewall portion 230 extends radially inward from the contacting portion 210 and the annular band 220. Base member 240 containing bead cores 241 fits around the wheel rim surface 11 and secures the insert to the rim in both inflated and deflated operation.

The inventors have recognized that the performance under cyclic stress of textile carcass materials improves when the carcass tension is maintained throughout each stress cycle. In a pneumatic tire, the inflation stress biases the carcass is in tension. In a non-pneumatic structure such as the runflat inserts disclosed herein, no such tension bias exists. Therefore, durability of the insert improves when the deformation of the carcass layer in the portion of the insert loaded against the tire minimizes the tendency for the carcass to undergo cyclic compressive stress.

As a first means to achieve this performance improvement, runflat insert 200 has only a single carcass layer in the upper sidewall portion. Runflat insert 200 further comprises a carcass layer having a main portion 231 that is adhered to the radially inner surface of the first membrane 221 and extending between the bead members 240. The carcass layer has a turned up portion 232 folded around the bead core 241. The turned up portion 232 extends radially outward from the base member 140 and terminates a radial distance HC above the bead core 241. Runflat insert 200 further improves durability by introducing a slight outward displacement C to the carcass layer 231. This displacement is assured by applying an extra elastomeric wedge 235 to the axially interior surface of carcass layer 231 and by proper specification of the sidewall thickness at the upper and lower extents of the wedge 235. Therefore, when the sidewall portion 230 experiences vertical compressive loads, the carcass is biased to buckle consistently in an axially outward direction. The effect of the wedge 235 and of the sidewall thickness serves to minimize the tendency of the carcass to experience cyclic compressive stress.

The wedge 235 has a height HG that is between about 50 percent to about 80 percent, and preferably about 65 percent, of the sidewall height HS. The wedge 235 is positioned approximately midway within the sidewall portion 230. The displacement C of carcass layer 231 is defined as the axial distance between the centerline of the carcass layer 231 and a chord connecting the upper and lower extents of the wedge 235. The displacement C is greater than zero and less than or equal to about 8 percent of the sidewall height C is preferably about 5 percent of the sidewall height HS. The wedge 235 has an axial thickness TG that may be greater or less than the displacement C of carcass 231. TG is between about 4 percent and about 10 percent, and preferably about 7 percent, of the sidewall height HS. Thickness measurements TB and TT specify the thickness of the sidewall material to the exterior of the carcass. TB is measured at the radially innermost extent of the wedge 235. TT is measured at the radially outermost extents of the wedge 235. TB and TT are each between about 4 percent and about 10 percent, and preferably about 8 percent, of the sidewall height HS. Runflat insert 200 was successfully constructed and evaluated using HS equal to 30 mm, C equal to 1.5 mm, HG equal to 20 mm, and TT, TB, and TG equal to 2 mm.

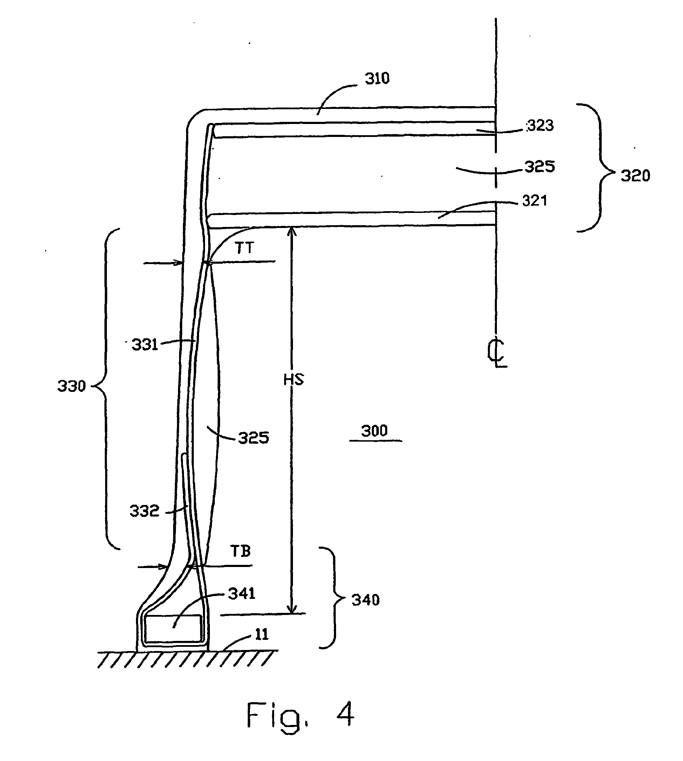

Figure 4 shows a version of the invention optimized for load carrying. That is to say, an insert having improved load/deflection stiffness. Runflat insert 300 shares the structure of the reinforced annular band 325 common to runflat inserts 100 and 200 previously disclosed. However, runflat insert 300 has a unique carcass layer comprising at least a discontinuous carcass segment 331 anchored in the base member 340 and extending radially outward to the second membrane 321. The carcass segment 331 is adhered to an axially outermost extent of the reinforced annular band 320. That is to say, the carcass segment 331 extends radially outward at least to the axial extremity of the second membrane 321. As compared to runflat insert 200 shown in Figure 3, the carcass arrangement shown in Figure 4 for runflat insert 300 improves the load/deflection stiffness of the annular band 320. For ease of manufacturing, the carcass segment 331 may also overlap the second membrane 321 a distance L as previously described for the runflat insert 100 shown in Figure 2.

The following aspects of the detailed description of the invention are common to any of the variations 100, 200, or 300 of the insert. For simplicity, each structural element references insert 100, although this shortcut is not intended in any way to limit the scope of this disclosure.

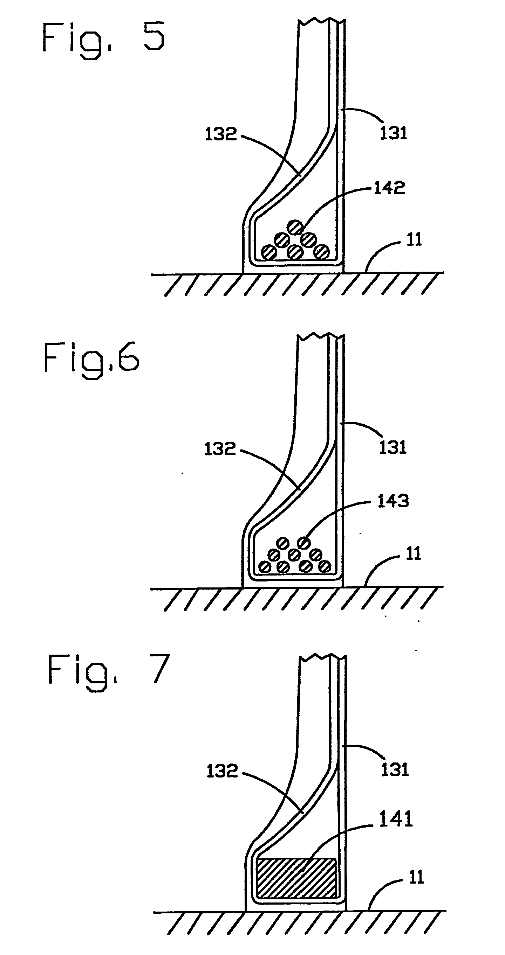

The runflat inserts of the invention have bead members with a high resistance to rotation about a longitudinal axis. The resistance to rotation provides both stable axial alignment on the wheel surface 11 and good durability to flexure of the sidewall portions. Figures 5, 6, and 7 disclose three alternative arrangements of bead reinforcements. Any of the reinforcements 141, 142, or 143 apply to the variations of the insert 100, 200, or 300. Figures 5 and 6 show a typical arrangement consisting of a continuous winding of wire reinforcement. Figure 5 shows a three-layer arrangement 141 consisting of a winding of wire of about 1 mm and having a first layer of three wires, a second layer of two wires, and a third layer of one wire. The arrangement 142 of Figure 6 provides a higher degree of bead rigidity and consists of a winding having a three-layer arrangement of four, then three, then two wires for the respective layers. Figure 7 shows a preferred form having a monolithic reinforcement 143 of generally rectangular cross-section having a width of at least 4 mm and height of at least 2 mm. Reinforcement 143 has a width of about 5% of the section width of the insert, and a height equal to about 50 percent of its width. The bead members of the non-pneumatic insert may have a lower tensile modulus and tensile strength than required for a pneumatic structure. In the instant invention, suitable materials for bead reinforcements 141, 142, or 143 should have a tensile modulus of at least about 100 GPa and a tensile yield strength of at least about 10 GPa.

The runflat inserts 100, 200, or 300 have an annular band comprising first and second membranes adhered to the elastomeric shear layer. The preferred deformation of the band occurs when the ratio of the longitudinal tensile modulus of each of the membranes to the shear modulus of the shear layer is at least 100:1. According to one form of the invention, the first and second membranes have longitudinally oriented cord reinforcements. Preferably, each membrane, 121 or 123, comprises at least two layers of mutually oblique cord reinforcements forming an angle with the tire circumferential direction of between about 10 degrees to about 20 degrees. Equation (1) below estimates the longitudinal tensile modulus of a membrane using conventional tire belt materials:

$$E'_{MEMBRANE} = (2D+t)\frac{E_{RUBBER}}{2(1-v^2)}\left[\left(\frac{P}{P-D}\right)\frac{2-(1+v)SIN^2(2\alpha)}{SIN^4\alpha}+\left(\frac{t}{D}\right)\frac{1}{TAN^2\alpha}\left(\frac{1}{TAN^2\alpha}-v\right)\right] \quad (1)$$

Where:

$E_{rubber}$ = Tensile modulus of the elastomeric coating material
P = Cord pace (cord centerline spacing) measured perpendicular to the cord direction
D = Cord diameter
v = Poisson's ratio for the elastomeric coating material
$\alpha$ = Cord angle with respect to the equatorial plan
t = Rubber thickness between cables in adjacent layers

Note that E' is the elastic modulus of the membrane times the effective thickness of the membrane

The elastomeric shear layer 125 preferably has a shear modulus of elasticity between about 3 MPa and about 20 MPa. The shear layer has a low hysteresis given by tangent delta less than or equal to about 0.1. Shear layer 125 has a thickness T2 between about 4 mm and about 20 mm.

An advantage of the instant invention is that the contact pressure during deflated operation between the insert and the tire is a design parameter that the designer may adjust. The contact pressure between the insert and the inside of the tire is given by the product of the shear modulus of elasticity of the shear layer times the radial thickness of the shear layer divided by the radius of the outermost extent of the second membrane. The insert delivers acceptable performance when the contact pressure is between about 2 bar and about 6 bar. In general, the contact pressure of the insert will be proportionately greater than the specified tire inflation pressure.

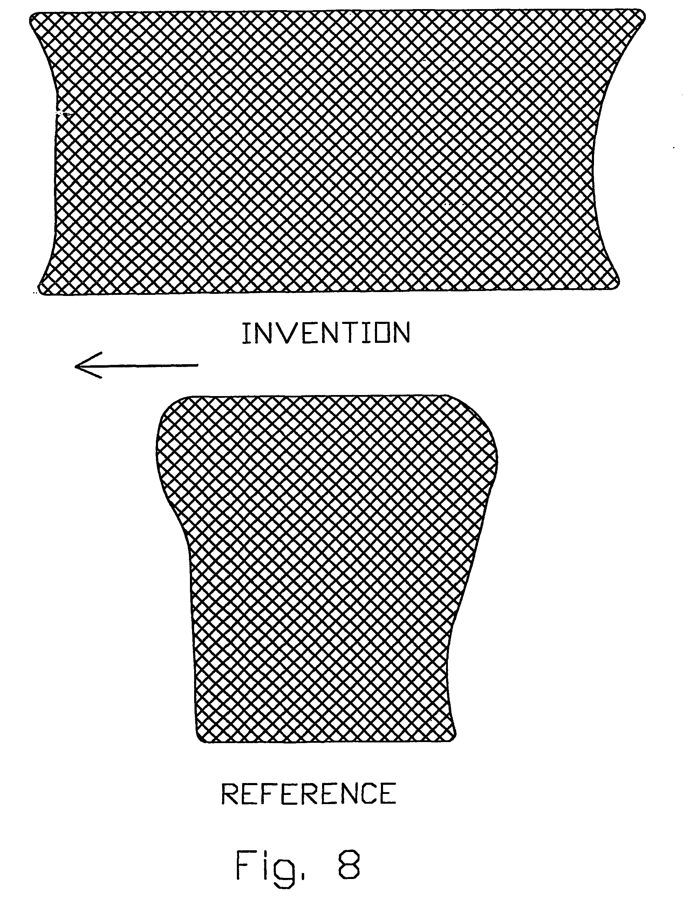

The advantages of the runflat insert of the invention are further appreciated by the following experimental data. Figure 8 shows a comparison of the shape of the contact area for a molded, elastomeric insert and for the runflat insert 200 of the invention. The molded elastomeric insert is of the type described in US Patent 5,891,279 issued to Lacour. The molded, elastomeric insert has an average contact pressure of about 5.2 bar. The runflat insert 200 has a larger contact area and a contact shape that more closely resembles that of a pneumatic tire. Larger contact area gives a lower average contact pressure for a given load. Runflat insert 200 has a lower average contact pressure of about 3.6 bar. The insert 200 has a larger, rectangular contact shape that promotes more uniform loading of the insert on the interior of the tire for better durability and resistance to impact loads.

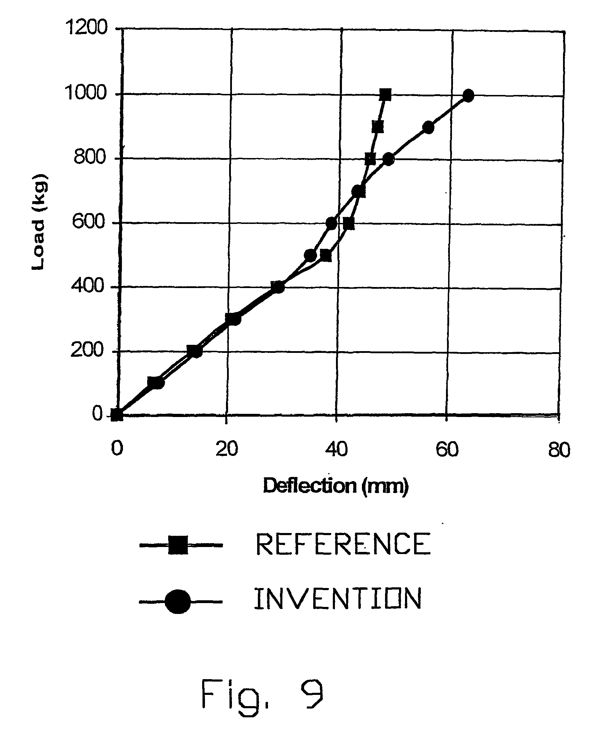

The assembly comprising the insert of the invention gives deflated performance similar to when the pneumatic tire is inflated. A simple measurement of the load/deflection stiffness demonstrates this advantage. In this test, the reference insert and the insert of the invention were mounted as part of a pneumatic tire and wheel assembly. Figure 9 shows the results of a load/deflection test where the mounted assemblies were loaded on simulated curb. The tire was inflated to 2.0 bar. The resulting vertical force was recorded as a function of the deflection of the assembly (the downward displacement of the axis of the wheel). Figure 9 shows the curves of load versus deflection for the two inserts. As deflection increases from zero up to approximately 30-35 mm, the curves for both assemblies track the deflection of the inflated tire. As the deflection surpasses about 35 mm, tire, the insert begins to contact the interior surface of the tire. The assembly comprising the molded insert demonstrates a marked increase in the vertical stiffness of the system as shown by the rapid load increase with further deflection of the system. This rapid stiffening of the assembly comprising the elastomeric insert has the undesirable effect of forcing the vehicle suspension to accommodate any further deflection.

However, Figure 9 clearly demonstrates that the assembly comprising the insert of the instant invention maintains a vertical stiffness that is remarkably similar to the original stiffness of the tire alone. Thus, the insert according to the invention avoids the negative effects of the undesirable impacts acting on the vehicle suspension.

Applicant understands that many other variations are apparent to one of ordinary skill in the art from a reading of the above specification. These variations and other variations are within the scope of the instant invention as defined by the following appended claims.

## Claims

1. A structurally run-flat insert (100, 200, 300) for enabling a vehicle to run on a deflated tire, mounted in an assembly comprising a pneumatic tire (20) and a wheel rim (10), said insert being mounted inside the air cavity of the tire and secured to the wheel rim, said structurally run-flat insert comprising:

- an elastomeric outer contacting portion (110, 210, 310) for contacting the interior surface of the tire during deflated operation of the tire, and
- at least one sidewall portion (130, 230, 330) extending radially inward from said contacting portion (110, 210, 310) for connecting said annular band (120, 220, 320) to a base member (140, 240, 340) fitted around the wheel rim (10) for securing said insert to the rim,

said structurally run-flat insert comprising:

a) a reinforced annular band (120, 220, 320) disposed radially inward of said outer contacting portion (110, 210, 310), said band comprising an elastomeric shear layer (125, 225, 325), at least a first membrane (121, 221, 321) adhered to the radially inward extent of said elastomeric shear layer (125, 225, 325) and at least a second membrane (123, 223, 323) adhered to the radially outward extent of said elastomeric shear layer, and
b) at least one carcass layer (131, 231, 331) adhered to said annular band (120, 220, 320), and said carcass layer extending radially inward from said annular band and anchored in said base member (140, 240, 340),

said structurally run-flat insert being **characterized in that** said elastomeric shear layer (125, 225, 325) has a thickness between about 4 mm and about 20 mm.

2. The structurally run-flat insert (100, 200, 300) of claim 1 wherein a ratio of the longitudinal tensile modulus of each of said membranes (121, 123, 221, 223, 321, 323) to the shear modulus of said shear layer (125, 225, 325) is at least equal to 100.

3. The structurally run-flat insert (100, 200, 300) of claim 1 or claim 2, wherein each of said membranes (121, 123, 221, 223, 321, 323) comprises at least one layer of essentially circumferentially oriented cord reinforcements.

4. The structurally run-flat insert (100, 200, 300) of claim 1 or claim 2, wherein each of said membranes (121, 123, 221, 223, 321, 323) comprises at least two layers of mutually oblique cord reinforcements, and said cord reinforcements make an angle with the tire circumferential direction of between about 10 degrees and about 20 degrees.

5. The structurally run-flat insert (100, 200, 300) of any one of claims 1 to 4, wherein said elastomeric shear layer (125, 225, 325) has a shear modulus of elasticity of between about 3 MPa and about 20 MPa.

6. The structurally run-flat insert (100, 200, 300) of claim 5, wherein said elastomeric shear layer (125, 225, 325) has a tangent delta of less than or equal to about 0.1.

7. The structurally run-flat insert (100, 200, 300) of any one of claims 1 to 6, wherein the product of the shear modulus of elasticity of said shear layer (125, 225, 325) times the radial thickness of said shear layer divided by the radius of the outermost extent of said second membrane (123, 223, 321) is between about 0.2 MPa and about 0.6 MPa.

8. The structurally run-flat insert (200, 300) of any of claims 1 to 7 wherein an elastomeric wedge (235, 335) is adhered to the interior surface of said carcass layer (231, 331) in said sidewall (230, 330), whereby said wedge biases said sidewall to buckle in an outward direction.

9. The structurally run-flat insert (200, 300) of claim 8 wherein said wedge (235, 335) has a radial height (HG) of about 50 percent to about 80 percent of the height (HS) of said sidewall (230, 330).

10. The structurally run-flat insert (200, 300) of claim 9 wherein said carcass layer (231, 331) has an axially outward displacement (C) from a chord connecting the upper and lower extents of said wedge (235, 335), said displacement (C) being greater than zero and less than or equal to about 8 percent of the height (HS) of said sidewall (230, 330).

11. The structurally run-flat insert (100, 200, 300) of any of claims 1 to 10 wherein said sidewall (230, 330) has a linear stiffness in tension of at least 100 daN/mm.

12. The structurally run-flat insert (100, 200, 300) of any of claims 1 to 11 wherein said base member (140, 240, 340) has a reinforcement material having a tensile modulus of at least about 100 GPa and a tensile yield strength of at least about 10 GPa.

13. The structurally run-flat insert (100, 200) of any of claims 1 to 12, wherein said carcass layer (131, 231) is a continuous ply having a main portion adhered to said radially inner surface of said first membrane (121, 221) and extending between said base members (140, 240).

14. The structurally run-flat insert (300) of any of claims 1 to 12, wherein said carcass layer (331) comprises at least a discontinuous segment anchored in said base member (340) and extending radially outward to said second membrane (323), and wherein said segment is adhered to an axially outermost extent of said reinforced annular band (320).

15. The structurally run-flat insert (100, 200, 300) of any of claims 1 to 14, wherein said carcass layer (131, 231, 331) axially overlaps said second membrane (123, 223, 323) not more than 10 mm.


**Patentansprüche**

1. Notlaufeinsatz mit Struktureffekt (100, 200, 300), der es einem Fahrzeug ermöglicht, mit einem platten Reifen zu fahren und in einem Aufbau eingebaut ist, der einen Luftreifen (20) und eine Radfelge (10) aufweist, wobei der Einsatz innerhalb des Luftraums des Reifens eingebaut und an der Radfelge befestigt ist, wobei der Notlaufeinsatz mit Struktureffekt folgendes aufweist:

   - einen elastomerischen äußeren Kontaktabschnitt (110, 210, 310), um die Innenfläche des Reifens während des Betriebs bei Druckverlust zu berühren, und
   - mindestens einen Seitenwandabschnitt (130, 230, 330), der sich von dem Kontaktabschnitt (110, 210, 310) aus radial nach innen erstreckt, um das ringförmige Band (120, 220, 320) mit einem Basisglied (140, 240, 340) zu verbinden, das um die Radfelge (10) herum angepasst ist, um den Einsatz an der Felge zu befestigen,

   wobei der Notlaufeinsatz mit Struktureffekt folgendes aufweist:

   a) ein verstärktes ringförmiges Band (120, 220, 320), das radial zum Innern des äußeren Kontaktabschnittes (110, 210, 310) hin angeordnet ist, wobei das Band eine elastomerische Scherschicht (125, 225, 325), mindestens eine erste Membran (121, 221, 321), die an der radial inneren Erstreckung der elastomerischen Scherschicht (125, 225, 325) haftet, und mindestens eine zweite Membran (123, 223, 323), die an der radial äußeren Erstreckung der elastomerischen Scherschicht haftet, aufweist, und
   b) mindestens eine Karkassenschicht (131, 231, 331), die an dem ringförmigen Band (120, 220, 320) haftet, und wobei sich die Karkassenschicht von dem ringförmigen Band aus radial nach innen erstreckt und in dem Basisglied (140, 240, 340) verankert ist,

   wobei der Notlaufeinsatz mit Struktureffekt **dadurch gekennzeichnet ist, dass** die elastomerische Scherschicht (125, 225, 325) eine Dicke zwischen ungefähr 4 mm und ungefähr 20 mm hat.

2. Notlaufeinsatz mit Struktureffekt (100, 200, 300) nach Anspruch 1, wobei ein Verhältnis des Längsstreckmoduls jeder der Membranen (121, 123, 221, 223, 321, 323) zum Schermodul der Scherschicht (125, 225, 325) mindestens gleich 100 ist.

3. Notlaufeinsatz mit Struktureffekt (100, 200, 300) nach Anspruch 1 oder 2, wobei jede der Membranen (121, 123, 221, 223, 321, 323) mindestens eine Schicht aus im Wesentlichen umfangsmäßig ausgerichteten Kordverstärkungen aufweist.

4. Notlaufeinsatz mit Struktureffekt (100, 200, 300) nach Anspruch 1 oder 2, wobei jede der Membranen (121, 123, 221, 223, 321, 323) mindestens zwei Schichten aus zueinander schräg liegenden Kordverstärkungen aufweist, und die Kordverstärkungen mit der Reifenumfangsrichtung einen Winkel zwischen ungefähr 10 Grad und ungefähr 20 Grad bilden.

5. Notlaufeinsatz mit Struktureffekt (100, 200, 300) nach einem der Ansprüche 1 bis 4, wobei die elastomerische Scherschicht (125, 225, 325) ein Scherelastizitätsmodul zwischen ungefähr 3 MPa und ungefähr 20 MPa hat.

6. Notlaufeinsatz mit Struktureffekt (100, 200, 300) nach Anspruch 5, wobei die elastomerische Scherschicht (125, 225, 325) einen Verlustfaktor von weniger oder gleich ungefähr 0,1 hat.

7. Notlaufeinsatz mit Struktureffekt (100, 200, 300) nach einem der Ansprüche 1 bis 6, wobei das Produkt des Scherelastizitätsmoduls der Scherschicht (125, 225, 325) mal der radialen Dicke der Scherschicht geteilt durch den Radius der äußersten Erstreckung der zweiten Membran (123, 223, 321) zwischen ungefähr 0,2 MPa und ungefähr 0,6 MPa liegt.

8. Notlaufeinsatz mit Struktureffekt (200, 300) nach einem der Ansprüche 1 bis 7, wobei ein Elastomerkeil (235, 335) an der Innenfläche der Karkassenschicht (231, 331) in der Seitenwand (230, 330) haftet, wodurch der Keil die Seitenwand vorbelastet, damit sie nach außen einknickt.

9. Notlaufeinsatz mit Struktureffekt (200, 300) nach Anspruch 8, wobei der Keil (235, 335) eine radiale Höhe (HG) von ungefähr 50 Prozent bis ungefähr 80 Prozent der Höhe (HS) der Seitenwand (230, 330) hat.

10. Notlaufeinsatz mit Struktureffekt (200, 300) nach Anspruch 9, wobei die Karkassenschicht (231, 331) eine Verschiebung (C) axial nach außen von einer Bogensehne aus hat, welche die oberen und unteren Erstreckungen des Keils (235, 335) verbindet, wobei die Verschiebung (C) größer als Null und kleiner oder gleich ungefähr 8 Prozent der Höhe (HS) der Seitenwand (230, 330) ist.

11. Notlaufeinsatz mit Struktureffekt (100, 200, 300) nach einem der Ansprüche 1 bis 10, wobei die Seitenwand (230, 330) eine lineare Zugsteifheit von mindestens 100 daN/mm hat.

12. Notlaufeinsatz mit Struktureffekt (100, 200, 300) nach einem der Ansprüche 1 bis 11, wobei das Basisglied (140, 240, 340) ein Verstärkungsmaterial mit einem Streckmodul von mindestens ungefähr 100 GPa und einer technischen Streckgrenze von mindestens ungefähr 10 GPa umfasst.

13. Notlaufeinsatz mit Struktureffekt (100, 200) nach einem der Ansprüche 1 bis 12, wobei die Karkassenschicht (131, 231) eine durchgehende Lage ist, von der ein Hauptabschnitt an der radialen Innenfläche der ersten Membran (121, 221) haftet und sich zwischen den Basisgliedern (140, 240) erstreckt.

14. Notlaufeinsatz mit Struktureffekt (300) nach einem der Ansprüche 1 bis 12, wobei die Karkassenschicht (331) mindestens ein nicht durchgehendes Segment aufweist, das in dem Basisglied (340) verankert ist und sich radial nach außen zur zweiten Membran (323) erstreckt, und wobei das Segment an einer axial äußersten Erstreckung des verstärkten ringförmigen Bandes (320) haftet.

15. Notlaufeinsatz mit Struktureffekt (100, 200, 300) nach einem der Ansprüche 1 bis 14, wobei die Karkassenschicht (131, 231, 331) die zweite Membran (123, 223, 323) um nicht mehr als 10 mm überlagert.

**Revendications**

1. Garniture structurelle (100, 200, 300) de roulage à plat destinée à permettre à un véhicule de rouler sur un bandage dégonflé, monté dans un ensemble qui comprend un bandage pneumatique (20) et une jante de roue (10), ladite garniture étant montée à l'intérieur de la cavité à air du bandage et fixée à la jante de roue, ladite garniture structurelle de roulage à plat comprenant :

   - une partie de contact extérieure (110, 210, 310) en élastomère qui est en contact avec la surface intérieure du bandage lorsque le bandage fonctionne en conditions dégonflées et
   - au moins une partie de paroi latérale (130, 230, 330) qui s'étend radialement vers l'intérieur depuis ladite partie de contact (110, 210, 310) et qui relie ladite bande annulaire (120, 220, 320) à un élément de base (140, 240, 340) fixé autour de la jante (10) de la roue pour fixer ladite garniture sur la jante,

   ladite garniture structurelle de roulage à plat comprenant :

   a) une bande annulaire de renfort (120, 220, 320) disposée radialement à l'intérieur de ladite partie extérieure de contact (110, 210, 310), ladite bande comprenant une couche de cisaillement (125, 225, 325) en élastomère, au moins une première membrane (121, 221, 321) collée sur l'extension radialement intérieure de ladite couche de cisaillement (125, 225, 325) en élastomère et au moins une deuxième membrane (123, 223, 323) collée sur la partie radialement extérieure de ladite couche de cisaillement en élastomère et
   b) au moins une couche de carcasse (131, 231, 331) collée sur ladite bande annulaire (120, 220, 320), ladite couche de carcasse s'étendant radialement vers l'intérieur de ladite bande annulaire et étant ancrée dans ledit élément de base (140, 240, 340),

ladite garniture structurelle de roulage à plat étant **caractérisée en ce que** ladite couche de cisaillement (125, 225, 325) en élastomère a une épaisseur comprise entre environ 4 mm et environ 20 mm.

**2.** Garniture structurelle (100, 200, 300) de roulage à plat selon la revendication 1, dans laquelle le rapport entre le module en traction longitudinale de chacune desdites membranes (121, 123, 221, 223, 321, 323) et le module de cisaillement de ladite couche de cisaillement (125, 225, 325) est au moins égal à 100.

**3.** Garniture structurelle (100, 200, 300) de roulage à plat selon la revendication 1 ou la revendication 2, dans laquelle chacune desdites membranes (121, 123, 221, 223, 321, 323) comprend au moins une couche de câbles de renfort orientés essentiellement suivant la circonférence.

**4.** Garniture structurelle (100, 200, 300) de roulage à plat selon la revendication 1 ou la revendication 2, dans laquelle chacune desdites membranes (121, 123, 221, 223, 321, 323) comprend au moins deux couches de câbles de renfort mutuellement obliques, lesdits câbles de renfort formant avec la direction périphérique du bandage un angle compris entre environ 10 degrés et environ 20 degrés.

**5.** Garniture structurelle (100, 200, 300) de roulage à plat selon l'une quelconque des revendications 1 à 4, dans laquelle ladite couche de cisaillement (125, 225, 325) en élastomère a un module d'élasticité en cisaillement compris entre environ 3 MPa et environ 20 MPa.

**6.** Garniture structurelle (100, 200, 300) de roulage à plat selon la revendication 5, dans laquelle ladite couche de cisaillement (125, 225, 325) en élastomère a une tangente delta inférieure ou égale à environ 0,1.

**7.** Garniture structurelle (100, 200, 300) de roulage à plat selon l'une quelconque des revendications 1 à 6, dans laquelle le produit entre le module d'élasticité en cisaillement de ladite couche de cisaillement (125, 225, 325) par l'épaisseur radiale de ladite couche de cisaillement, divisé par le rayon de la dimension extérieure de ladite deuxième membrane (123, 223, 323), est compris entre 0,2 MPa et environ 0,6 MPa.

**8.** Garniture structurelle (200, 300) de roulage à plat selon l'une quelconque des revendications 1 à 7, dans laquelle un profilé (235, 335) en élastomère est collé sur la surface intérieure de ladite couche de carcasse (231, 331) dans ladite paroi latérale (230, 330), ledit profilé sollicitant ladite paroi latérale vers un flambage dans une direction extérieure.

**9.** Garniture structurelle (200, 300) de roulage à plat selon la revendication 8, dans laquelle ledit profilé (235, 335) a une hauteur radiale (HG) qui représente environ 50 pour cent à environ 80 pour cent de la hauteur (HS) de ladite paroi latérale (230, 330).

**10.** Garniture structurelle (200, 300) de roulage à plat selon la revendication 9, dans laquelle ladite couche de carcasse (231, 331) a un déplacement axialement extérieur (C) depuis une corde qui relie l'extension supérieure et l'extension inférieure dudit profilé (235, 335), ledit déplacement (C) étant supérieur à zéro et inférieur ou égal à environ 8 pour cent de la hauteur (HS) de ladite paroi latérale (230, 330).

**11.** Garniture structurelle (100, 200, 300) de roulage à plat selon l'une quelconque des revendications 1 à 10, dans laquelle ladite paroi latérale (230, 330) a une rigidité linéaire en traction d'au moins 100 daN/mm.

**12.** Garniture structurelle (100, 200, 300) de roulage à plat selon l'une quelconque des revendications 1 à 11, dans laquelle ledit élément de base (140, 240, 340) présente un matériau de renfort dont le module de traction est d'au moins environ 100 GPa et la résistance à la déformation en traction d'au moins environ 10 GPa.

**13.** Garniture structurelle (100, 200) de roulage à plat selon l'une quelconque des revendications 1 à 12, dans laquelle ladite couche de carcasse (131, 231) est une nappe continue dont une partie principale est collée sur ladite surface radialement intérieure de ladite première membrane (121, 221) et s'étend entre lesdits éléments de base (140, 240).

**14.** Garniture structurelle (300) de roulage à plat selon l'une quelconque des revendications 1 à 12, dans laquelle ladite couche de carcasse (331) comprend au moins un segment discontinu ancré dans ledit élément de base (340) et qui s'étend radialement vers l'extérieur en direction de la deuxième membrane (323), ledit segment étant collé sur une extension radialement extérieure de ladite bande annulaire de renfort (320).

15. Garniture structurelle (100, 200, 300) de roulage à plat selon l'une quelconque des revendications 1 à 14, dans laquelle ladite couche de carcasse (131, 231, 331) est superposée axialement à ladite deuxième membrane (123, 223, 323) sur au plus 10 mm.

Fig. 1

Fig. 2

Fig. 3

Fig. 4

Fig. 5

Fig.6

Fig. 7

INVENTION

REFERENCE

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3885614 A

- US 5891279 A, Lacour